# DEMANDE DE BREVET EUROPEEN

(11) **EP 1 050 864 A1**
(43) Date de publication de la demande: **08.11.2000**
(21) Numéro de dépôt: 00401211.8
(22) Date de dépôt: 03.05.2000
(51) Int. Cl.: G08C 23/04, H04Q 9/00

(54) **Système de télécommande d'appareil à liaison bidirectionnelle**

(30) Priorité: 05.05.1999 FR 9905699
(71) Demandeur: SAGEM SA, 75016 Paris (FR)
(72) Inventeur: Surcouf, André, 95320 Saint-lue-la-Foret (FR)
(74) Mandataire: Fort, Jacques

(57) **Abrégé**

Le système de télécommande à partir d'un boîtier portable comprend, sur le boîtier (12), un clavier de commande à plusieurs touches dont des touches numériques et un émetteur d'un faisceau modulé de transmission d'informations de commande. L'appareil (10) porte un récepteur (20) du faisceau modulé et des moyens de modification de l'état de l'appareil en fonction des informations transmises, ainsi qu'un second émetteur(32), apparié à un second récepteur monté sur le boîtier. Le second émetteur est destiné à transmettre au boîtier des informations. Certaines des touches du clavier du décodeur sont munies de moyens activables permettant de les mettre en évidence. Le transfert des informations provoque, après chaque action sur une touche, la mise en évidence des touches dont l'actionnement est compatible avec l'état de l'appareil et la touche qui vient d'être actionnée.

## Description

La présente invention a pour objet un système de télécommande d'appareil à partir d'un boîtier. Elle trouve une application particulièrement importante, bien que non exclusive, dans la commande à distance, par faisceau infrarouge ou ultrasonore en propagation libre, d'un appareil audiovisuel tel qu'un magnétoscope.

On connaît déjà des systèmes de télécommande d'appareil à partir d'un boîtier portable du type comprenant :
- sur le boîtier, un clavier de commande à plusieurs touches dont des touches numériques et un émetteur d'un faisceau modulé de transmission d'informations de commande, et
- sur l'appareil, un récepteur dudit faisceau modulé et des moyens de modification de l'état de l'appareil en fonction des informations transmises.

Dans le cas particulier d'un appareil audiovisuel notamment il peut notamment s'agir d'opérations de sélection, de programmation, de verrouillage, d'affichage d'un téléguide, de demande d'accès à un programme à péage, etc... Dans le cas d'un climatiseur placé à un endroit peu accessible, il peut s'agir d'informations de commande de mise en route, d'arrêt, de réglage de puissance, de programmation, etc.

Les systèmes de télécommande sont de plus en plus compliqués à utiliser, étant donné le grand nombre de fonctions qu'ils sont susceptible d'activer ou de désactiver sur l'appareil télécommandé et le nombre de réglages possibles.

La présente invention vise notamment à fournir un système de télécommande apportant une aide en ligne à l'utilisateur, particulièrement utile dans le cas où l'appareil télécommandé ne comporte pas d'écran sur lequel il serait possible d'afficher les indications.

Dans ce but, l'invention propose un système du type ci-dessus défini, caractérisé en ce que :
- l'appareil comprend un second émetteur, apparié à un second récepteur monté sur le boîtier et destiné à transmettre au boîtier des informations,
- certaines au moins des touches du clavier du décodeur sont munies de moyens activables permettant de les mettre en évidence,
- et l'appareil et le boîtier sont prévus pour que le transfert au boîtier desdites informations provoque, après chaque action sur une touche, la mise en évidence des touches dont l'actionnement est compatible avec l'état de l'appareil et la touche qui vient d'être actionnée.

La mise en évidence peut s'effectuer de façon simple en munissant les touches d'une diode électroluminescente visible à travers une paroi translucide de la touche.

Les informations transmises de l'appareil à la télécommande peuvent identifier l'état de l'appareil ; dans ce cas, un logiciel est mémorisé dans le clavier de commande pour définir, à partir des informations, les touches qui doivent être mises en évidence. Dans une variante de réalisation, ce logiciel est incorporé dans l'appareil et celui-ci transmet alors des informations identifiant les touches à mettre en évidence.

Dans l'appareil, les moyens nécessaires pour mettre en oeuvre l'invention peuvent être regroupés dans un module particulier, incorporé en option et pouvant être omis dans le cas où une simple télécommande sans aide en ligne est jugée suffisante.

Le logiciel nécessaire pour déduire les touches à mettre en évidence, de l'état de l'appareil et de l'historique des manipulations précédentes du boîtier par l'utilisateur, peut être très simple et se limiter à une centaine d'instructions.

Les caractéristiques ci-dessus ainsi que d'autres apparaîtront mieux à la lecture de la description qui suit d'un mode particulier de réalisation, donnée à titre d'exemple non limitatif. La description se réfère aux dessins qui l'accompagnent, dans lesquels :
- la figure 1 est un schéma synoptique faisant apparaître les composants qui interviennent dans la mise en oeuvre de l'invention dans le cas d'un appareil de télévision ;
- la figure 2 est un schéma montrant une séquence d'opération successive et des échanges entre boîtiers et appareils.

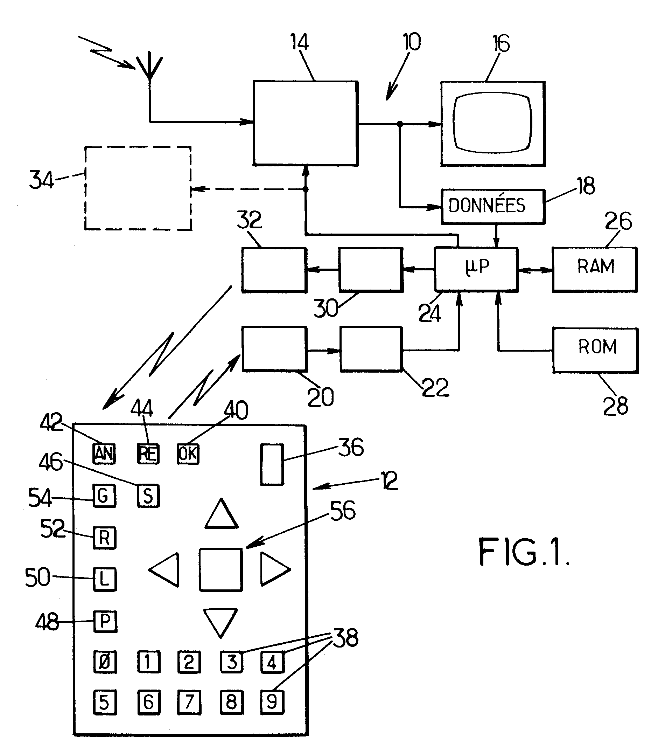

Le système montré en figure 1 comporte un appareil de télévision 10, auquel peut être incorporé un magnétoscope, et un boîtier 12 de télécommande. De façon classique, l'appareil 10 comporte des circuits 14 de démodulation et de sélection de programme fournissant des signaux d'images et de son à un écran de visualisation 16 et des haut-parleurs non représentés. L'invention s'applique aussi bien dans le cas de la télévision numérique que de la télévision analogique. La figure 1 montre également un circuit 18 d'extraction de données qu'on trouve dans le signal entrant, par exemple transmis en sous trame dans le cas de télévision analogique et sous forme de paquet de données dans le cas de télévision numérique.

L'appareil comporte également un récepteur 20 d'un signal provenant du boîtier 12, transmis par exemple par voie infrarouge ou ultrasonore. Ce signal est modulé de façon à transmettre des données. Un circuit 22 de démodulation et éventuellement de conversion numérique-analogique fournit en sortie les instructions contenues dans le faisceau émis par l'émetteur du boîtier 12. Les données ainsi obtenues sont transmises à un organe central de calcul qui peut être constitué par un microprocesseur 24, associé à une mémoire vive 26 et une mémoire morte 28. Une mémoire morte contient les programmes nécessaires au fonctionnement du système. La mémoire vive permet de stocker temporairement les informations reçues par le microprocesseur et les données élaborées par ce dernier.

Le microprocesseur commande, par l'intermédiaire d'un circuit de modulation 30 et éventuellement de conversion numérique-analogique, un émetteur 32. Cet émetteur fournit un faisceau à propagation libre de transmission d'information vers un récepteur apparié porté par le boîtier 12. Les modes de modulation et/ou les fréquences de porteuse des signaux de l'appareil et/ou à partir de ce dernier sont choisis pour éviter les interférences.

Le microprocesseur 24 permet de sélectionner des fonctions, à partir des données reçues du boîtier 12. Ce microprocesseur peut également être prévu pour programmer un magnétoscope 34 et établir par exemple une liste d'émissions à enregistrer sur une période de temps déterminée. Une horloge non représentée permet de cadencer les opérations dans l'appareil 10.

Le boîtier de télécommande 12 présente une face avant munie de boutons de commande et éventuellement de voyants, dont la disposition peut être librement choisie. En règle générale, ces touches comprennent :
- une touche d'allumage et d'extinction 36,
- dix touches de numérotation affectées aux chiffres 0 à 9,

Pour permettre la mise en oeuvre de l'invention, on utilisera habituellement un certain nombre d'autres touches, telles que :
- une touche de confirmation 40,
- une touche d'annulation 42,
- une touche de retour 44,
- une touche 46 de choix d'un mode de sélection de canal,
- une touche 48 de mise en mode de pré-programmation,
- une touche 50 de mise en mode de lecture d'un programme enregistré,
- une touche 52 de commande d'enregistrement,
- une touche 54 provoquant l'affichage, sur l'écran 16, d'un guide de programmes, contenu dans les données recueillies sur l'antenne.

D'autres touches sont généralement prévues pour régler le volume sonore, la brillance, etc...

La mise en oeuvre de l'invention implique que certaines au moins des touches puissent être mises en évidence. Il s'agit notamment des touches qui sont susceptibles d'être utilisées au cours d'une étape de processus autre que la première, en produisant un effet utile. En d'autres termes, ces touches doivent comporter des moyens de mise en évidence indiquant à l'utilisateur, à chaque étape du processus, les seules touches sur lesquelles il peut agir pour obtenir un résultat utile.

Ce cas est en particulier celui des touches numériques 38. Elles permettront par exemple d'une part de sélectionner un canal, d'autre part d'afficher une heure de début d'enregistrement souhaité ou de fin d'enregistrement, une date, etc...

Les touches peuvent en particulier être prévues pour être illuminées lorsque leur actionnement est utile. Pour cela, chaque touche peut avoir un fond translucide. Une source telle qu'une diode électroluminescente est alors placée derrière le fond.

Les informations transmises par l'émetteur 32 peuvent se limiter à des indications sur l'état de l'appareil, tel qu'il se présente soit dès initialisation, soit après une série de manoeuvres. Dans ce cas, un logiciel doit être mémorisé dans le clavier de commande pour définir les touches à mettre en évidence.

Dans un autre mode de réalisation, le logiciel est incorporé dans l'appareil, par exemple dans la mémoire morte 28. L'émetteur 32 transmet alors des informations identifiant directement les touches à mettre en évidence.

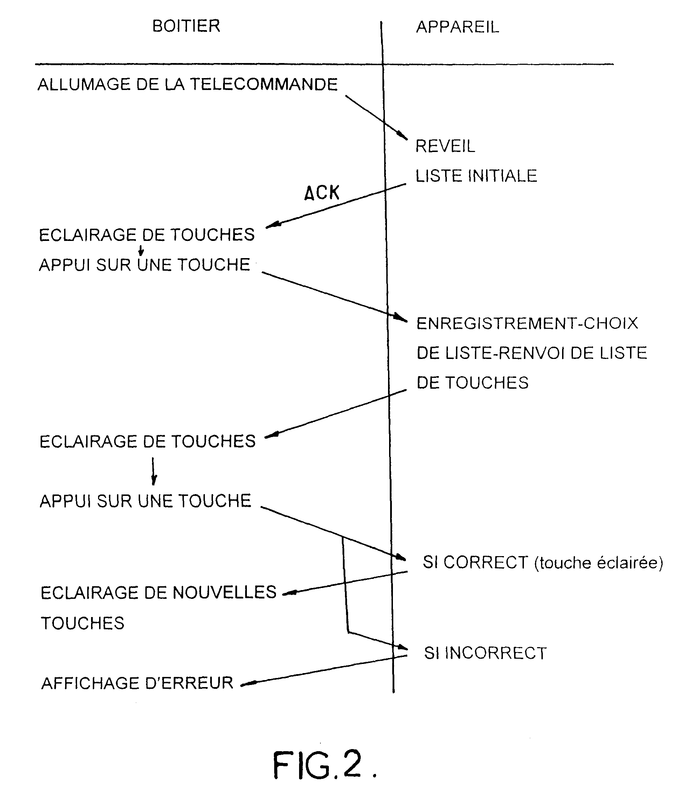

Ce cas est celui d'une séquence du genre montré en figure 2.

L'allumage de la télécommande par appui sur la touche 36 fournit une instruction de réveil à l'appareil 10. Le microprocesseur sélectionne alors les pages de programme correspondant à la liste initiale d'opérations possibles et renvoie un signal d'accusé de réception ACK qui peut être prévu pour provoquer l'allumage des touches autorisées, par exemple des touches 46 à 54. L'appui sur une de ces touches provoque l'enregistrement du message correspondant et la sélection de la liste d'opérations ultérieures possibles en mémoire 28, ainsi que le renvoi des instructions indiquant les touches dont l'actionnement va être possible. Ces instructions sont décodées et provoquent l'éclairage des touches appropriées.

L'appui ultérieur sur une touche va avoir un effet différent suivant le cas.

Si la touche actionnée était éclairée et correspond à une manoeuvre autorisée, il y a éclairage des nouvelles touches pouvant être mises en action.

Dans le cas contraire, il y a un affichage d'erreur, qui peut par exemple être constitué simplement par un clignotement des touches autorisées.

Une fois la sélection terminée, elle peut être confirmée par appui sur la touche de confirmation 40 : prélablement, le programme peut par exemple éclairer les touches 40, 42 et 44.

On voit qu'à chaque étape le microprocesseur 24 déduit, de l'état présent de l'appareil 10 et de l'historique des manipulations précédentes du boîtier 12 par l'utilisateur, quelles sont les touches de la télécommande dont l'actionnement est autorisé. A chaque appui sur une touche, l'appareil 10 recherche les nouvelles fonctions accessibles à partir de son état interne et des commandes précédentes et provoque l'éclairement des touches pouvant activer les fonctions susceptibles d'être mises en oeuvre.

Si par exemple l'utilisateur appuie sur le bouton 48 de mise en mode de programmation, la séquence ultérieure peut être la suivante :
- éclairement des touches 38, définissant le canal à choisir, et éventuellement de touches supplémentaires 56 de navigation permettant d'afficher des canaux successifs suivant une progression régulière,
- une fois la sélection effectuée (et éventuellement confirmée à l'aide de la touche 40, qui est alors mise en évidence) enregistrement du numéro de canal en mémoire vive par le microprocesseur 24 et renvoi d'instructions permettant d'afficher la date et l'heure, chaque fois en mettant en évidence les touches accessibles,
- l'indication de la date, en allumant uniquement les chiffres de 0 à 3 pour un premier appui, puis de 0 à 9 pour un second appui (éventuellement même en n'allumant que 0 et 1 si le second chiffre sélectionné a été 3, les mois ne pouvant avoir plus de 31 jours),
- l'indication de l'heure, avec affichage initial de l'heure de début en quatre étapes, la première n'autorisant que l'appui sur 0, 1 et 2, le second appui autorisant tous les chiffres (ou seulement 0 à 4 si le chiffre précédent a été 2),
- un éclairage des chiffres de 0 à 5, puis 0 à 9.

Le boîtier peut être complété par un écran très simplifié donnant quelques indications très simples, telles que « canal », « date », « heure »... ou un afficheur à sept segments permettent de contrôler visuellement le chiffre introduit.

Le boîtier peut être prévu avec une touche supplémentaire de sélection de paramètres sonores ou lumineux, actionnables en montés et descente par le jeu de touches 56.

## Revendications

1. Système de télécommande d'appareil à partir d'un boîtier portable de télécommande, comprenant :
- sur le boîtier (12), un clavier de commande à plusieurs touches dont des touches numériques et un émetteur d'un faisceau modulé de transmission d'informations de commande, et
- sur l'appareil (10), un récepteur (20) du dit faisceau modulé et des moyens de modification de l'état de l'appareil en fonction des informations transmises,
caractérisé en ce que :
- l'appareil comprend un second émetteur(32), apparié à un second récepteur monté sur le boîtier et destiné à transmettre au boîtier des informations,
- certaines au moins des touches (36-54) du clavier du boîtier sont munies de moyens activables permettant de les mettre en évidence,
- et l'appareil et le boitier sont prévus pour que le transfert desdites informations provoque, après chaque action sur une touche, la mise en évidence de celles des touches dont l'actionnement est compatible avec l'état de l'appareil et la touche qui vient d'être actionnée.

2. Système selon la revendication 1, caractérisé en ce que les touches sont mises en évidence par éclairement.

3. Système selon la revendication 2, caractérisé en ce que les touches sont munies d'une diode électroluminescente visible à travers une paroi translucide de la touche.

4. Système selon la revendication 1,2 ou 3, caractérisé en ce que les informations transmises de l'appareil à la télécommande identifient l'état de l'appareil et en ce qu' un logiciel est placé dans le boitier de commande pour définir, à partir des informations, les touches qui doivent être mises en évidence

5. Système selon la revendication 1,2 ou 3, caractérisé en ce qu'un logiciel est incorporé dans l'appareil pour définir les touches à mettre en évidence et en ce que l'émetteur de l'appareil transmet alors des informations identifiant les touches à mettre en évidence.

6. Système selon l'une quelconque des revendications précédentes, caractérisé en ce que les moyens de l'appareil nécessaires pour mettre en oeuvre l'invention sont regroupés dans un module particulier.

7. Système selon l'une quelconque des revendications précédentes, caractérisé en ce que le second émetteur est alimenté par des moyens comprenant un organe de calcul (24) recevant les informations fournies par le premier récepteur (20), une mémoire morte (28) de stockage de programmes et une mémoire vive (26) de stockage de l'état de l'appareil et des touches précédemment actionnées.
